# EUROPÄISCHE PATENTSCHRIFT

(11) **EP 0 648 241 B1**
(45) Veröffentlichungstag und Bekanntmachung des Hinweises auf die Patenterteilung: **27.08.1997**
(21) Anmeldenummer: 93914689.0
(22) Anmeldetag: 22.06.1993
(51) Int. Cl.: C08G 69/10, C08F 267/00, C08F 222/00, C11D 3/37, C02F 5/12, C13F 1/00

(54) **MODIFIZIERTE POLYASPARAGINSÄUREN, VERFAHREN ZU IHRER HERSTELLUNG UND IHRE VERWENDUNG**
MODIFIED POLYASPARTIC ACIDS, PROCESS FOR PREPARING THE SAME AND THEIR USE
ACIDES POLYASPARTIQUES MODIFIES, PROCEDE DE FABRICATION ET UTILISATION

(30) Priorität: 03.07.1992 DE 4221875
(43) Veröffentlichungstag der Anmeldung: 19.04.1995
(73) Patentinhaber: BASF Aktiengesellschaft, 67063 Ludwigshafen (DE)
(72) Erfinder: KRONER, Matthias, D-6719 Eisenberg (DE); HARTMANN, Heinrich, D-6703 Limburgerhof (DE); BOECKH, Dieter, D-6703 Limburgerhof (DE); FUNHOFF, Angelika, D-6900 Heidelberg (DE); BAUR, Richard, D-6704 Mutterstadt (DE); KUD, Alexander, D-6509 Eppelsheim (DE); SCHWENDEMANN, Volker, D-6730 Neustadt (DE); POTTHOFF-KARL, Birgit, D-6700 Ludwigshafen (DE); BUECHNER, Karl-Heinz, D-6822 Altlussheim (DE)
(86) Internationale Anmeldenummer: EP9301588
(87) Internationale Veröffentlichungsnummer: WO9401486

(56) Entgegenhaltungen:
- EP-A- 0 305 283
- EP-A- 0 454 126
- DE-A- 2 253 190
- US-A- 4 534 881
- US-A- 4 868 287
- Database Chemical Abstracts (Host: STN), CA99(26): 218 035f, Colombus, Ohio, VS; & JP-A-58 095 596
- Database Chemical Abstracts (Host: STN): CA92(18):152 405y, Colombus, Ohio, VS; & Kogyo Yosui, (251), 8-13., H. KUMANOMIDO et al.: "Color removal from semichemical pulp mill effluent by cationic polyelectrolyte. I Treatment of semichemical pulp mill effluent by cationic polyamides" 1979
- Database Chemical Abstracts (Host: STN): CA73(11):56 434u, Colombus, Ohio, VS; & JP-A-45 017 419
- Database Chemical Abstracts (Host: STN): CA108(6): 43 913r, Colombus, Ohio, VS; & Biomaterials, 8(5), 407-410, D.PRAMANICK et al.: "Synthesis and biodegradation of polymers derived from aspartic acid"
- Database Chemical Abstracts (Host: STN): CA79(12):67 728t, Colombus, Ohio, VS; &JP-A-48 025 092
- Database Chemical Abstracts (HOST: STN): CA105(24):209 785r, Colombus, Ohio, VS; & Izv. Akad. Nauk Kaz. SSR, Ser. Khim., (4) 43-49, E. ERGOZHIN et al.: "New soluble complexing polyelectrolytes synthesized from amino acids" 1986
- Database Chemical Abstracts (Host: STN): CA116(14): 132 208x, Colombus, Ohio, VS; & DE-A-4 106 866
- J. Med. Chem.,Vol. 16,(1972) 893-897

## Beschreibung

Die Erfindung betrifft modifizierte Polyasparaginsäuren, die durch Polycokondensation von Asparaginsäure mit von Aminosäuren verschiedenen cokondensierbaren Verbindungen oder durch Polymerisieren von monoethylenisch ungesättigten Monomeren in Gegenwart von Polyasparaginsäuren nach Art einer radikalisch initiierten Pfropfpolymerisation erhältlich sind, Verfahren zur Herstellung der modifizierten Polyasparaginsäuren sowie ihre Verwendung als Waschmitteladditiv und Wasserbehandlungsmittel.

Polyasparaginsäure und Kondensate der Asparaginsäure mit anderen Aminosäuren sind bekannt.

So wird beispielsweise in Nature, Band 163, 213 (1949) beschrieben, daß sich beim Erhitzen von Asparaginsäure auf 200°C hochmolekulare Kondensationsprodukte bilden. Aus J. Amer. Chem. Soc., Band 74, Seiten 5304 und 5307 (1952) ist die thermische Polykondensation von Asparaginsäure/Glutaminsäuremischungen in Gegenwart von Phosphorsäure bekannt.

In Arch.Biochem.Biophys. Band 86, 281-285 (1960) wird die Polykondensation von Aminosäuremischungen, bestehend aus 2 Teilen Glutaminsäure, 2 Teilen Asparaginsäure und einem Teil einer Mischung aus anderen Aminosäuren in Gegenwart von Phosphorsäure bei Temperaturen über 100°C beschrieben. Es werden Proteinoide erhalten, die mit steigender Kondensationstemperatur steigende Ausbeuten und höheres Molgewicht besitzen. Die Proteinoide enthalten 10 bis 30 mol-% Glutaminsäureeinheiten einkondensiert. Die Glutaminsäureeinheiten befinden sich hauptsächlich an den Kettenenden. Die erreichbaren Molmassen liegen bei 35000.

Durch rein thermische Behandlung von Glutaminsäure bildet sich gemäß Journal of the American Chemical Society, Band 80, Seite 2694 (1958) nahezu quantitativ Pyroglutaminsäure, die zur Polykondensation nicht fähig ist. Durch Copolykondensation von Glutaminsäure und anderen Aminosäuren sind jedoch Polykondensate herstellbar, die Glutaminsäureeinheiten einkondensiert enthalten.

In Nature, Band 190, Seite 531 (1961), und Polym. Bull., Band 1 (1978), 3, 177-180, wird die thermische Polykondensation von L-Asparagin und Isoasparagin in siedendem Wasser beschrieben. Es bilden sich Polyasparaginsäuren mit mittleren Molmassen bis zu 3000.

In J. Org. Chem., Band 26, 1084 (1961), wird die Polykondensation von N-Acetylasparaginsäure bei 145-200°C unter Abspaltung von Wasser und Essigsäure beschrieben. Es bildet sich ein glasiger Festkörper, der als Polyaspartimid identifiziert worden ist. In dieser Literaturstelle wird auch die Polykondensation des Hydrobromids des Asparaginsäureanhydrid in Pyridin beschrieben.

Eine Methode unter Verwendung von Phosphorsäure zur Polykondensation der DL-Asparaginsäure wird von Neri in J. Med. Chem., Vol. 16, 893-897 (1972), beschrieben. Bei einem Molverhältnis von Phosphorsäure/Asparaginsäure von 0,6 wird ein Polyaspartimid erhalten, das als Lösung in Dimethylformamid eine reduzierte Viskosität von 45 ml/g besitzt. Durch anschließende Umsetzung mit Ethanolamin wird eine modifizierte Polyasparaginsäure erhalten, die als Plasmaexpander geeignet ist. Die Umsetzung wird in Dimethylformamid als Lösemittel durchgeführt.

Durch thermische Polykondensation erhaltene Polyasparaginsäuren sind als Korrosionsinhibitoren für Stahl geeignet, vgl. Surface Reactive Peptides and Polymers, C.S. Sikes und A.P. Wheeler, Dallas, 1989, ACS Symposium Series 444, Washington 1991, Kapitel 21.

Die Verwendung von biologisch abbaubaren Polymeren als Additive in der Wasserbehandlung wird als ökologisch erfolgversprechende Alternative für die rein synthetischen Polymeren beurteilt, vgl. US-A-4 534 881 sowie Beiträge von Sikes und Wheeler in Chemical Aspects of Regulation of Mineralization, Univ. S. Alabama Publ. Services, Mobile, 1988, Seiten 15-20, und in Surface Reactive Peptides and Polymers (siehe oben).

Für die Verhinderung mineralischer Abscheidungen werden in der US-A-4 868 287 polyanionische und hydrophob modifizierte Peptide mit Blockstrukturen beschrieben. Beispielsweise besteht ein Block aus 15 Asparaginsäureeinheiten und ist mit einem Block aus 8 Alanineinheiten verbunden. Das kleinste wirksame Peptid besteht aus 5 Einheiten, von denen 2 aus der Gruppe der ionischen Aminosäuren zu wählen sind. Beide Blöcke sollen zusammen 120 Einheiten nicht überschreiten.

In der US-A-4 534 881 wird die Inhibierung von anorganischen oder biologischen Calciumcarbonatausfällungen durch Polyaspartat, Polyglutamat und Copolykondensaten mit anderen Aminosäuren beschrieben, die ein bevorzugtes Molgewicht von 3500 bis 10000 besitzen. Die Polyaminosäuren werden beispielsweise in Meerwasseraufbereitungsanlagen oder Kühlkreisläufen als Scaleinhibitor verwendet.

Aus der DE-A-22 53 190 ist bekannt, mit langkettigen Alkylaminen umgesetzte Polyaspartimide als Tenside in Waschmitteln zu verwenden. Für die Umsetzung wird Dimethylformamid als Lösemittel benötigt.

Aus der EP-A-0 454 126 ist bekannt, Polyaminosäuren, insbesondere Polyasparaginsäure oder Polyglutaminsäure als Builder in Waschmitteln zu verwenden.

Aus Makromol. Chem. Band 182, 2557-2561 (1981) ist die Polycokondensation von Asparaginsäure mit Milchsäure und Glykolsäure in Gegenwart von Orthophosphorsäure als Katalysator bekannt. Die Polycokondensate werden als Implantate verwendet.

In der US-A-4 696 981 wird die Polycokondensation von Ammoniumsalzen oder Amiden der Fumarsäure, Maleinsäure oder Äpfelsäure mit α-, β-, γ-, δ- oder ε-Aminosäuren unter Einwirkung von Mikrowellen beschrieben. Die Ausbeuten an Polykondensaten liegen zwischen 16 und 71 %. Es verbleiben hohe Anteile unbekannter niedermolekularer Reaktionskomponenten, die über Membranfiltration abgetrennt werden müssen, was die Methode technisch uninteressant macht.

Der Erfindung liegt die Aufgabe zugrunde, neue Stoffe zur Verfügung zu stellen. Eine weitere Aufgabe der Erfindung ist es, biologisch abbaubare Additive für die Waschmittelindustrie, die Wasserbehandlung und die Zuckerindustrie zur Verfügung zu stellen.

Die Aufgabe wird erfindungsgemäß gelöst mit modifizierten Polyasparaginsäuren, die erhältlich sind durch Polycokondensation von
a) 1 bis 99,9 mol-% Asparaginsäure mit
b) 99 bis 0,1 mol-% an Fettsäuren, mehrbasischen Carbonsäuren, Anhydriden mehrbasischer Carbonsäuren, mehrbasischen Hydroxycarbonsäuren, einbasischen Polyhydroxycarbonsäuren, alkoxylierten Alkoholen, alkoxylierten Aminen, Aminozukkern, Kohlenhydraten und/oder Zuckercarbonsäuren sowie Mischungen der genannten Verbindungen zu Polykondensaten mit K-Werten von 5 bis 150 oder durch Polymerisieren von monoethylenisch ungesättigten Monomeren mit Ausnahme von Styrol in Gegenwart von Polyasparaginsäuren und/oder Cokondensaten der Asparaginsäure nach Art einer radikalisch initiierten Pfropfpolymerisation zu Pfropfpolymerisaten mit K-Werten von 10 bis 200, wobei die K-Werte jeweils nach H. Fikentscher in 1%iger wäßriger Lösung bei pH 7 und 25°C am Natriumsalz bestimmt werden.

Gegenstand der Erfindung ist außerdem ein Verfahren zur Herstellung von modifizierten Polyasparaginsäuren bei dem man
a) 1 bis 99,9 mol-% Asparaginsäure mit
b) 99 bis 0,1 mol-% an Fettsäuren, mehrbasischen Carbonsäuren, Anhydriden mehrbasischer Carbonsäuren, mehrbasischen Hydroxycarbonsäuren, einbasischen Polyhydroxycarbonsäuren, alkoxylierten Alkoholen, alkoxylierten Aminen, Aminozukkern, Kohlenhydraten und/oder Zuckercarbonsäuren sowie Mischungen des genannten Verbindungen
bei Temperaturen von 120 bis 270°C der Polycokondensation unterwirft oder daß man monoethylenisch ungesättigte Mononere mit Ausnahme von Styrol in Gegenwart von Polyasparaginsäuren, Cokondensaten der Asparaginsäure oder den Ammonium-alkalimetall- oder Erdalkalimetallsalzen von Polyasparaginsäuren und/oder ihren Cokondensaten und Radikale bildenden Polymerisationsinitiatoren polymerisiert.

Die zuletzt genannte Aufgabe wird gelöst durch Verwendung der modifizierten Polyasparaginsäuren und deren Ammonium- und Alkalisalzen als Zusatz zu phosphatarmen und phosphatfreien Wasch- und Reinigungsmitteln, als Wasserbehandlungsmittel und als Belagsverhinderer bei der Eindampfung von Zuckersaft. Für diese Verwendungen sind auch diejenigen modifizierten Polyasparaginsäuren geeignet, die erhältlich sind durch Polykondensation von
a) 1 bis 99,9 mol-% Asparaginsäure mit
b) 99 bis 0,1 mol-% an Glykolsäure und/oder Milchsäure
und Umsetzung der Polycokondensate mit Aminen oder Alkalimetallbasen in wäßrigem Medium.

Als Komponente a) für die Herstellung von modifizierten Polyasparaginsäuren kann L-, D- und DL-Asparaginsäure verwendet werden. DL-Asparaginsäure ist technisch leicht zugänglich, z.B. durch Umsetzung von Ammoniak mit Maleinsäure oder Fumarsäure. Asparaginsäure kann nach allen bekannten Methoden hergestellt werden. L-Asparaginsäure wird durch asymmetrische L-Aspartase katalysierte Addition von Ammoniak an Fumarsäure hergestellt. Geeignete Mikroben für die industrielle Biokonversion von Fumarsäure in L-As-paraginsäure beinhalten mutierte Stämme von beispielsweise Pseudomonas, Brevibacterium flavum oder lactoferum. Die Mikroorganismen können bei der katalysierten Anlagerung von Ammoniak an Fumarsäure auf einer festen Phase immobilisiert sein. Die Produktion von L-Asparaginsäure kann somit ökonomisch und kontinuierlich in einem durchströmten Reaktor oder Rohr durchgeführt werden, vgl. Ullmanns Encyklopädie der technischen Chemie, 1985, Band A2, Seite 68. L-Asparaginsäure kann auch beispielsweise durch chemische oder enzymatische Hydrolyse von L-Asparagin hergestellt werden. L-Asparagin fällt als Nebenprodukt in der Zukkermelasse und bei der Verarbeitung von Kartoffeln an. Zur Herstellung der Polykondensate wird vorzugsweise L- und DL-Asparaginsäure eingesetzt. Besonders bevorzugt dient biotechnologisch hergestellte L-Asparaginsäure und aus Fumarsäure oder Maleinsäure und Ammoniak hergestellte DL-Asparaginsäure als Ausgangsmaterial zur Herstellung der Cokondensate der Polyasparaginsäure.

Die Asparaginsäure ist zu 1 bis 99,9 vorzugsweise 70 bis 99,9 mol-% in die Polycokondensate einkondensiert.

Als Komponente (b) der Polykondensate kommen sämtliche Fettsäuren in Betracht. Sie können gesättigt oder ethylenisch ungesättigt sein. Beispiele für Fettsäuren sind Ameisensäure, Essigsäure, Propionsäure, Buttersäure, Valeriansäure, Laurinsäure, Palmitinsäure, Stearinsäure, Behensäure, Ölsäure, Caprinsäure, Linolsäure, Linolensäure, Sorbinsäure, Myristinsäure, Undecansäure und alle in der Natur vorkommenden Fettsäuregemische, z. B. C₁₂/C₁₄- oder C₁₆/C₁₈-Fettsäuremischungen. Als ethylenisch ungesättigte Fettsäuren eignen sich auch Acrylsäure oder Methacrylsäure.

Mehrbasische Carbonsäuren sind z. B. Oxalsäure, Adipinsäure, Fumarsäure, Maleinsäure, Itaconsäure, Aconitsäure, Bernsteinsäure, Malonsäure, Korksäure, Azelainsäure, Pyridindicarbonsäure, Furandicarbonsäure, Phthalsäure, Terephthalsäure, Diglykolsäure, Glutarsäure, substituierte C₄-Dicarbonsäuren, beispielsweise Mercaptobernsteinsäure, Sulfobernsteinsäure, C₁- bis C₂₆-Alkylbernsteinsäuren (z. B. Octylbernsteinsäure oder Dodecylbernsteinsäure), C₂-C₂₆-Alkenylbernsteinsäure (z. B. Octenylbernsteinsäure oder Dodecenylbernsteinsäure), 1,2,3-Propantricarbonsäure, 1,1,3,3-Propantetracarbonsäure, 1,1,2,2-Ethantetracarbonsäure, 1,2,3,4-Butantetracarbonsäure, 1,2,2,3-Propantetracarbonsäure, 1,3,3,5-Pentantetracarbonsäure, 1,2,4-Benzoltricarbonsäure und 1,2,4,5-Benzoltetracarbonsäure.

Sofern die oben angegebenen mehrbasischen Carbonsäuren Anhydride bilden können, so können auch diese Anhydride als Komponente (b) bei der Herstellung der Polycokondensate eingesetzt werden, z. B. Bernsteinsäureanhydrid, Dianhydrid der Butantetracarbonsäure, Phthalsäureanhydrid, Acetylcitronensäureanhydrid, Maleinsäureanhydrid, Itaconsäureanhydrid und Aconitsäureanhydrid.

Als Komponente b) kommen auch mehrbasische Hydroxycarbonsäuren und/oder ein basische Polyhydroxycarbonsäuren in Betracht. Mehrbasische Hydroxycarbonsäuren tragen neben mindestens einer Hydroxygruppe mindestens zwei oder mehr Carbonsäuregruppen. Beispiele sind Citronensäure, Isocitronensäure, Schleimsäure, Weinsäure, Tartronsäure und Äpfelsäure.

Einbasische Polyhydroxycarbonsäuren tragen neben einer Carbonsäuregruppe zwei oder mehr Hydroxygruppen. Beispiele sind Glycerinsäure, Bis(hydroxymethyl)-propionsäure, Gluconsäure und hydroxylierte ungesättigte Fettsäuren wie beispielsweise Dihydroxystearinsäure.

Als Komponente b) eignen sich außerdem einwertige Alkohole, die beispielsweise 1 bis 22 C-Atome aufweisen, z. B. Methanol, Ethanol, n-Propanol, Isopropanol, Butanol, Pentanol, Hexanol, Cyclohexanol, Octanol, Decanol, Dodecanol, Palmitylalkohol, Stearylalkohol und Behenylalkohol, Diese Alkohole können außerdem alkoxyliert sein. Geeignet sind beispielsweise die Additionsprodukte von 1 bis 200 mol eines C₂- bis C₄-Alkylenoxids an ein Mol der genannten Alkohole. Als Alkylenoxyde kommen beispielsweise Ethylenoxid, Propylenoxid und Butylenoxide in Betracht. Vorzugsweise verwendet man Ethylenoxid, Propylenoxid oder man addiert an den Alkohol Ethylenoxid und Propylenoxid, wobei die Reihenfolge der Zugabe der Alkylenoxide auch umgekehrt erfolgen kann. Von technischem Interesse sind insbesondere die Anlagerungsprodukte von 3 bis 20 Mol Ethylenoxid an 1 Mol C₁₃/C₁₅-Oxoalkohole oder an Fettalkohole. Die Alkohole können auch gegebenenfalls eine Doppelbindung aufweisen, wie Oleylalkohol.

Als Komponente b) eignen sich außerdem Polyole, wie Ethylenglykol, Glycerin, Oligoglycerin, Erythrit, Pentaerythrit, Sorbit sowie alkoxylierte Polyole, wie Polyethylenglykole, Polypropylenglykole, ethoxyliertes Glycerin und ethoxyliertes Pentaerythit. Die Polyalkylenglykole können Molekulargewichte bis 5000 haben.

Weitere geeignete Verbindungen der Komponente b) sind Amine, wie C₁- bis C₂₂-Alkylamine, beispielsweise Methylamin, Trimethylamin, Ethylamin, Diathylamin, Triethylamin, Cyclohexylamin, Octylamin und Stearylamin, Palmitylamin, Ethylendiamin, Diethylentriamin, Triethylentetramin, Hexamethylendiamin, Diaminobutan, Oleylamin, Hydroxylamin, Hydrazin, N-(Carboxymethyl)hydroxylamin, N,N-Di(carboxymethyl)hydroxylamin, Tricarboxymethyl-hydroxylamin, Tetracarboxymethylhydrazin, Ethanolamin, Diethanolamin und Triethanolamin sowie Polyalkylenamine, wie Polyethylenimin mit Molekulargewichten bis zu 5000.

Als Komponente (b) kommen außerdem alkoxylierte Amine in Betracht, z. B. die Anlagerungsprodukte von 5 bis 30 Mol Ethylenoxid an 1 Mol Stearylamin, Oleylamin oder Palmitylamin.

Geeignet sind außerdem als Komponente (b) natürlich vorkommende Aminozucker, wie Chitosamin oder Chitosan sowie aus reduzierend wirkenden Kohlenhydraten durch reduktive Aminierung erhaltene Verbindungen, wie Aminosorbit.

Als Komponente (b) sind außerdem Kohlenhydrate wie Glucose, Saccharose, Dextrine, Stärke und abgebaute Stärke, Maltose und Zukkercarbonsäuren einsetzbar, z. B. Schleimsäure, Gluconsäure, Glucarsäure, Gluconsäurelacton, Gulonsäurelacton und Glucuronsäure.

Ein weiterer Gegenstand der Erfindung ist die Verwendung von modifizierten Polyasparaginsäuren, die durch Polycokondensation von
(a) 1 bis 99,9 mol-% Asparaginsäure mit
(b) 99 bis 0,1 mol-% Alkoholen und/oder Aminen
bei Temperaturen von 120 bis 270°C zu Polykondensaten mit K-Werten von 10 bis 100 (bestimmt nach H. Fikentscher in 1 %iger wäßriger Lösung bei pH 7 und 25°C am Natriumsalz), Aufschlämmen der Polykondensate in Wasser und Hydrolysieren und Neutralisieren mit Basen hergestellt werden, als Zusatz zu phosphatarmen und phosphatfreien Wasch- und Reinigungsmitteln. Bevorzugt setzt man als Komponente (b) Cyclohexylamin, Octylamin, Stearylamin, Palmitylamin, Ethylendiamin, Triethylentetramin, Hexamethylendiamin, Diaminobutan und/oder Oleylamin ein.

Es können auch Salze und Additionsverbindungen aus Diaminen und Dicarbonsäuren zur Polycokondensation eingesetzt werden. So läßt sich beispielsweise eine Polyamid modifizierte Polyasparaginsäure herstellen, die aus 80 mol-% Asparaginsäure, 10 mol-% Adipinsäure und 10 mol-% Hexamethylendiamin besteht.

Es lassen sich auch Tenside herstellen, indem Alkyl- oder Alkenylbernsteinsäuren oder Fettsäuren mit Asparaginsäure cokondensiert wird, indem beispielsweise 1 Mol Stearinsäure oder Dodecenylbernsteinsäure mit 3 Mol Asparaginsäure polykondensiert und anschließend in die neutralisierte Form überführt wird. Als hydrophobe Einheiten sind Fettsäure, Alkyl- oder Alkenylbernsteinsäure an polymere Asparaginsäure gebunden. Solche Tenside sind anionischen Charakters und besitzen Dispergiereigenschaften. Sie sind biologisch abbaubar und hautverträglich. Durch Erniedrigung der Fettsäuremenge werden diese Tenside hydrophiler und höhermolekular, um bei niedrigen Fettsäuren/Asparaginsäureverhältnis in polymere Dispergiermittel mit hydrophilen Eigenschaften überzugehen.

Die Verbindungen der Komponente b) werden in Mengen von 0,1 bis 99, vorzugsweise 0,5 bis 30 mol-% bei der Polycokondensation eingesetzt. Man kann eine einzige Verbindung der Komponente (b) oder Mischungen aus 2 oder mehreren Verbindungen (b) einsetzen.

Die Polycokondensation der Komponenten a) mit b) erfolgt bei Temperaturen von 120 bis 270°C, bevorzugt bei 120 bis 250°C. Das Tempern wird vorzugsweise im Vakuum oder unter Inertgasatmosphäre durchgeführt. Die Kondensationsreaktion kann jedoch auch unter erhöhtem Druck oder in einem Gasstrom, z. B. in Kohlendioxid, Luft, Stickstoff oder überhitztem Wasserdampf erfolgen. Die Zeiten für die Kondensation sind von den gewählten Reaktionsbedingungen abhängig. Sie liegen im allgemeinen zwischen 1 Minute und 50 Stunden. Zur technischen Herstellung der Polycokondensate kann man beispielsweise ein heizbares Trockenband, Schaufeltrockner, Walzentrockner, einen Taumeltrockner oder Wirbelschichttrockner einsetzen. Polycokondensate mit niedrigem Molekulargewicht können auch in einem druckdicht verschlossenen Gefäß hergestellt werden, indem man das bei der Polykondensation entstehende Wasser nicht oder nur teilweise entfernt. Auch durch Infrarotstrahlung oder Mikrowellenstrahlung läßt sich die Polycokondensation durchführen. Unter sonst vergleichbaren Reaktionsbedingungen wird durch Zugabe von Komponenten (b) das Molekulargewicht der Polykondensate gegenüber den reinen Polyasparaginsäure-Homokondensaten erniedrigt.

Bei der Polycokondensation von Asparaginsäure mit den anderen Carbonsäuren kann man auch von den Salzen der Asparaginsäure oder den Salzen der anderen Carbonsäuren ausgehen, wenn man bei der Polykondensation zusätzlich anorganische Säuren mitverwendet. Als Salze der Asparaginsäure und der mehrbasischen Carbonsäuren, der Fettsäuren, der Acrylsäure oder der Methacrylsäure kommen beispielsweise die Ammonium-, Alkalimetall- und Erdalkalimetallsalze in Betracht. Wenn man die Polycokondensation in Gegenwart von anorganischen Säuren durchführt, kann die für die Kondensation erforderliche Temperatur gegenüber der rein thermischen Polykondensation der Asparaginsäure mit den Verbindungen b) gesenkt werden. Bei Einsatz von Salzen der Asparaginsäure und anorganischen Säuren betragen die Kondensationstemperaturen 100 bis 270°C und liegen vorzugsweise in dem Bereich von 120 bis 250°C, während die Reaktionszeiten etwa 1 Minute bis zu 10 Stunden betragen.

Die Polykondensation kann beispielsweise in fester Phase durchgeführt werden, indem man zunächst eine wäßrige Lösung von Asparaginsäure und mindestens einer der in Betracht kommenden Verbindungen der Komponente b) herstellt und die Lösung zur Trockne eindampft. Hierbei kann bereits eine Kondensation einsetzen. Es ist aber auch möglich, das Eindampfen unter schonenden Bedingungen vorzunehmen, wobei sich im Fall der Verwendung von Carbonsäuren als Komponente b) zunächst ein festes Salz der Asparaginsäure mit einer Carbonsäure bildet, das einer nachfolgenden Kondensation unterworfen wird. Die Kondensation in fester Phase kann vorteilhaft sein, weil sie in üblichen Apparaten für den Feststoffumgang durchgeführt werden kann, nämlich Taumeltrockner, Trokkonband oder Wirbelschichttrockner. Beispielsweise können zuerst folgende Salze hergestellt und anschließend in fester Phase einer Polycokondensation unterworfen werden. Die Herstellung der Salze erfolgt beispielsweise durch Mischen von Asparaginsäure mit Sulfobernsteinsäure, Äpfelsäure, Weinsäure, Zitronensäure, Isozitronensäure, Schleimsäure, Glycerinsäure, Maleinsäure, Fumarsäure, Aconitsäure, Itaconsäure oder Butantetracarbonsäure. Man kann jedoch auch Asparaginsäure mit einer Mischung aus Zitronensäure und Weinsäure für die Salzherstellung und anschließende Kondensation miteinander mischen. Weitere Mischungen dieser Art sind möglich, wenn man beispielsweise als Komponente b) Gemische aus Butantetracarbonsäure und Weinsäure, Butantetracarbonsäure und Zitronensäure, Butantetracarbonsäure und Äpfelsäure, Butantetracarbonsäure und Sorbit oder aus Maleinsäure und Acrylsäure einsetzt.

Einführung von ethylenisch ungesättigten Doppelbindungen in Polyasparaginsäure (ungesättigt modifizierte Polyasparaginsäure) gelingt durch Polycokondensation von Asparaginsäure mit ungesättigten Carbonsäuren oder ihren Anhydriden, beispielsweise Maleinsäure, Maleinsäureanhydrid, Fumarsäure, Aconitsäure und Itaconsäure in Gegenwart von Phosphorsäure. Die Polycokondensate werden extraktiv mit Wasser und 1-N-Salzsäure von monomeren Anteilen befreit. Durch spektroskopische Analyse mittels ¹³C-NMR (Lösemittel deuteriertes Dimethylsulfoxid) lassen sich Signale bei 135 ppm beobachten. Sie beweisen, daß ungesättigte Carbonsäuren in das Polykondensat eingebaut sind. Die ungesättigten Carbonsäuren können als Endgruppe in Form von cyclischen Maleinimid-Einheiten, offenkettigen Maleinmonoamid- oder Fumarmonoamid-Einheiten oder in der Peptidkette in Form von Maleindiamid- oder Fumardiamid-Einheiten eingebaut sein. Die Doppelbindungen stehen also endständig (Endgruppe) oder sind über die Polykondensathauptkette verteilt.

Polycokondensate ungesättigter Carbonsäuren lassen sich ebenfalls erzeugen, wenn Asparaginsäure mit Hydroxypolycarbonsäuren zusammen kondensiert werden. Beispielsweise zeigen in Gegenwart von Phosphorsäure hergestellte Cokondensate mit Äpfelsäure ebenfalls Signale bei 135 ppm (Maleinimid-, Maleinamid-Maleindiamid-Einheiten) und mit Citronensäure bei 123 ppm und 140 ppm. Unter diesen Polykondensationsbedingungen tritt gleichzeitig Dehydratisierung der Hydroxypolycarbonsäuren ein.

Werden zur Polycokondensation beispielsweise 10 mol-% ungesättigte Carbonsäuren oder Hydroxycarbonsäuren eingesetzt, so beträgt der Anteil an ungesättigten Carbonsäuren in den Polycokondensaten 3-6 mol-%. Werden höhere Anteile der Carbonsäuren zur Cokondensation eingesetzt, so beträgt der Anteil ungesättigter Carbonsäuren in den Polykondensaten mehr als 6 mol-%.

Bei der Polycokondensation können beispielsweise als anorganische Säuren alle Halogenwasserstoffsäuren verwendet werden. Bevorzugt wird Chlorwasserstoffsäure eingesetzt. Die Halogenwasserstoffsäuren können gasförmig oder in flüssigem Zustand verwendet werden. Bevorzugt finden konzentrierte wäßrige Lösungen von Chlorwasserstoffsäure Anwendung, in denen Asparaginsäure unter Bildung von Asparaginsäure-Hydrochlorid löslich ist. Es kann aber auch flüssiger oder gasförmiger Chlorwasserstoff zur Herstellung der Hydrochloride verwendet werden. Die wäßrigen Lösungen die Asparaginsäure-Hydrochlorid und mindestens eine Verbindung der Komponente b) gelöst enthalten, werden zur Trockene eingedampft. Der Rückstand wird durch Erhitzen auf Temperaturen in dem oben angegebenen Bereich polykondensiert. Zum kontinuierlichen Eindampfen der wäßrigen Lösungen kann beispielsweise ein Sprühtrockner oder Sprühwirbelschichttrockner verwendet werden. Die Polykondensation der Hydrochloride kann direkt im Anschluß an das Eindampfen oder auch zu einem späteren Zeitpunkt erfolgen. Geeignete Apparaturen für die Kondensation sind alle diejenigen Vorrichtungen, bei denen Feststoffe im Vakuum oder in einem Gasstrom auf Temperaturen bis zu 270°C erhitzt werden können. Im Verlauf der Polykondensation tritt der Chlorwasserstoff aus dem Kondensationsprodukt wieder aus. Der freigesetzte Chlorwasserstoff kann zurückgewonnen und erneut mit Asparaginsäure umgesetzt werden.

Die Polykondensation mit den anderen in Betracht kommenden Verbindungen kann auch mit anorganischen Säuren des Phosphors in verschiedenen Oxidationsstufen durchgeführt werden. Als anorganische Säuren des Phosphors setzt man bevorzugt Phosphorsäure und polymere Anhydride der Phosphorsäure (Polyphosphorsäuren) ein. Als Phosphorsäure wird bevorzugt technische, 75 bis 85 %ige wäßrige ortho-Phosphorsäure eingesetzt. Man kann jedoch auch 100 %ige ortho-Phosphorsäure oder Metaphosphorsäure verwenden. Von den polymeren Anhydriden der Polyphosphorsäure eignen sich beispielsweise Diphosphorsäure (Pyrophosphorsäure), Triphosphorsäure und höhere Homologe. Die Polykondensation kann auch mit einem Überschuß an gebundenem Phosphor enthaltenden Säuren durchgeführt werden. Diese Maßnahme kann in solchen Fällen von Vorteil sein, in denen höhermolekulare Polycokondensate der Asparaginsäure sehr hochviskose Lösungen in Phosphorsäuren bilden. Überstöchiometrische Mengen an Phosphorsäuren können in solchen Fällen als Löse- und Verdünnungsmittel die Viskosität der entstehenden Polymerlösungen herabsetzen.

Die Umsetzung mit den Phosphorsäuren geschieht in der Weise, daß man Asparaginsäure und mindestens eine Verbindung der Komponente b) in Phosphorsäure bei 20°C aufschlämmt und vorzugsweise im Vakuum auf eine Temperatur von etwa 140°C erwärmt. Das mit der Phosphorsäure gegebenenfalls eingebrachte Wasser destilliert dabei ab, gleichzeitig löst sich die Asparaginsäure und die Verbindung der Komponente b) in der Phosphorsäure auf. Man erhält eine homogene Schmelze, die durch Erhitzen auf Temperaturen in dem Bereich von 120 bis 270°C, vorzugsweise im Vakuum, thermisch polykondensiert wird. Mit fortschreitender Polykondensation nimmt die Viskosität der Reaktionsmischung zu. Das Ansteigen des Molekulargewichts kann an der Zunahme der Viskosität der Reaktionsmischung verfolgt werden. Durch vorzeitigen Abbruch der Polykondensationsreaktion läßt sich das Molekulargewicht der Kondensate begrenzen. Die Komponenten (b) haben einen erheblichen Einfluß auf die Viskosität der Reaktionsmischung. Es ist beispielsweise möglich, eine Polycokondensation von 1 mol Asparaginsäure, 0,1 mol Butantetracarbonsäure und 1 mol Phosphorsäure in einen mit einem Rührer ausgestatteten Reaktor durchzuführen.

In analoger Weise erfolgt die Polykondensation der Asparaginsäure und der Verbindungen der Komponente b) in Polyphosphorsäure. Polyphosphorsäuren entstehen durch Auflösen von Phosphorpentoxid in Phosphorsäure. Eine Aufschlämmung von Asparaginsäure und mindestens einer Verbindung b) wird in Polyphosphorsäure auf eine Temperatur von 100 bis 260°C erwärmt. Hierbei bildet sich eine Lösung,die - bevorzugt im Vakuum - getempert und dadurch kondensiert wird. Geeignete Apparate hierfür sind beispielsweise Kneter, Extruder oder heizbare Förderbänder. Durch die Anwesenheit von Polykondensationsbeschleunigern, vorzugsweise Phosphorsäure, werden Polykondensate mit besserer biologischer Abbaubarkeit erhalten. Die Polycokondensation von Asparaginsäure und den Cokomponenten in Gegenwart von Phosphorsäure ist deshalb bevorzugt.

Die Polykondensation von a) mit b) kann auch in Gegenwart von Derivaten der Phosphorsäure durchgeführt werden, z.B. Phosphoroxychlorid, Phosphoroxybromid, Phosphorpentachlorid und Phosphorpentoxid. Außerdem eignen sich Phosphorsäuren, in denen der Phosphor eine niedrigere Oxidationsstufe als +5 aufweist. Zu dieser Gruppe von Säuren gehört beispielsweise die phosphorige Säure, die, bezogen auf 1 Mol Asparaginsäure, in Mengen von 0,05 bis 0,3 Mol bei der Polykondensation eingesetzt wird. Phosphorige Säure kann jedoch auch in Kombination mit Phosphorsäure oder Chlorwasserstoffsäure angewendet werden. So hat sich beispielsweise die Kondensation von Asparaginsäure mit einer Mischung aus 1 Mol Phosphorsäure und 0,05 bis 0,1 Mol phosphoriger Säure pro 1 Mol Asparaginsäure als sehr vorteilhaft erwiesen. Man kann auch Mischungen aus 1 Mol Chlorwasserstoffsäure und 0,05 bis 0,1 Mol phosphoriger Säure pro 1 Mol Asparaginsäure bei der Polycokondensation einsetzen. Außerdem eignen sich Derivate der phosphorigen Säure als Hilfsmittel bei der Kondensation, um die bei der Kondensation erforderliche Temperatur zu erniedrigen und die Reaktion zu beschleunigen. Außer der phosphorigen Säure können bei der Kondensation auch Phosphortrichlorid, Phosphortribromid, Triethylphosphit, Diethylchlorphosphit, Ethyldichlorphosphit oder Tetraethylpyrophosphit eingesetzt werden.

Eine weitere Möglichkeit besteht darin, Asparaginsäure und die anderen Komponenten in Gegenwart von unterphosphoriger Säure zu kondensieren. Die unterphosphorige Säure wird üblicherweise in Form wäßriger Lösungen verwendet. Pro 1 Mol Asparaginsäure verwendet man 0,05 bis 0,5 Mol unterphosphorige Säure. Die unterphosphorige Säure wird auf der Asparaginsäure homogen verteilt, indem man die Asparaginsäure zusammen mit mindestens einer Verbindung (b) in wäßriger unterphosphoriger Säure löst und die Lösung eindampft. Die unterphosphorige Säure kann auch in Kombination mit Chlorwasserstoffsäure oder Phosphorsäure verwendet werden. Beispielsweise verwendet man eine Mischung aus 1 Mol Phosphorsäure und 0,05 bis 0,1 Mol unterphosphoriger Säure oder eine Mischung von 1 Mol Chlorwasserstoffsäure mit 0,05 bis 0,5 Mol unterphosphoriger Säure pro 1 Mol Asparaginsäure bei der Kondensation.

Geeignete andere anorganische Säuren, die bei der Polycokondensation der Asparaginsäure verwendet werden, sind beispielsweise Schwefelsäure, Dischwefelsäure, Schwefeltrioxid, Natrium- und Kaliumhydrogensulfat.

Bei der thermischen Polykondensation der Asparaginsäure mit mindestens einer Verbindung (b) fällt das Polykondensat in Form der wasserunlöslichen modifizierten Polyasparaginsäureimide an, die in Phosphorsäure und Dimethylformamid löslich sind. Sie haben in 1 %iger Lösung in Dimethylformamid K-Werte von 8 bis 70, vorzugsweise 10 bis 45. Die Cokondensate der Asparaginsäure können von den nicht umgesetzten Ausgangsstoffen beispielsweise dadurch gereinigt werden, daß man das Kondensationsprodukt zerkleinert und mit der 1- bis 10-fachen Menge an Wasser bei Temperaturen von 10 bis 100°C extrahiert. Dabei lösen sich die nicht umgesetzten Einsatzstoffe heraus. Die Cokondensate aus (a) und (b) verbleiben als unlöslicher Rückstand. Nicht umgesetzte Asparaginsäure läßt sich durch Extraktion mit 1-N-Salzsäure leicht herauslösen.

Die modifizierten Polyasparaginsäuren werden aus den Polycokondensaten vorzugsweise dadurch erhalten, daß man die Polycokondensate in Wasser aufschlämmt und bei Temperaturen im Bereich von 0 bis 90°C unter Zugabe von Base hydrolysiert und neutralisiert. Diese Reaktionen können selbstverständlich auch bei Temperaturen durchgeführt werden, die unterhalb und oberhalb des oben angegebenen Bereichs liegen. Geeignete Basen sind beispielsweise Natronlauge, Kalilauge, Soda, Kaliumcarbonat, Ammoniak und Amine, wie Trimethylamin, Diethylamin, Ethanolamin, Diethanolamin, Triethanolamin und Morpholin. Die Neutralisation kann auch mit Hilfe von Erdalkalimetallbasen erfolgen, z.B. Calciumhydroxid oder Bariumhydroxid. Die Behandlung der Polycokondensate erfolgt vorzugsweise bei pH-Werten von 8 bis 10. Hydrolyse und Neutralisation können durch Einwirkung von Ultraschall auf die Reaktionspartner beschleunigt werden. Bei der Behandlung mit Basen erhält man teilweise oder vollständig neutralisierte Polycokondensate, die 1 bis 99,9 mol-% Asparaginsäure und 99 bis zu 0,1 mol-% mindestens einer Verbindung (b) einkondensiert enthalten, in Form der Alkali-, Erdalkali- bzw. Ammoniumsalze. Die Polymeren haben K-Werte (bestimmt nach H. Fikentscher in 1 %iger wäßriger Lösung bei pH 7 und 25°C am Natriumsalz) von 5 bis 150 und vorzugsweise 10 bis 100. Insbesondere kommen solche Kondensate für den Einsatz in Wasch- und Reinigungsmitteln in Betracht, deren K-Wert 10 bis 90 beträgt.

Verfahren zur einfachen Modifizierung der Polykondensationsprodukte mit Aminen in wäßrigem Medium geschieht zweckmäßigerweise durch Aufschlämmen und Rühren der Kondensationsprodukte in Wasser, das Ethanolamin enthält, bei 20 bis 100°C, bevorzugt bei 30 bis 80°C. Nach wenigen Minuten hat sich das Polykondensat zu einer klaren wäßrigen neutralen Lösung aufgelöst. Durch die hohe Reakionsbereitschaft von Aminen sind die Amine sowohl salzartig als auch amidartig an die Polyasparaginsäure gebunden. Salzartig gebundene Anteile lassen sich entfernen, indem die wäßrige Lösung mittels Mineralsäuren auf pH 1-2 angesäuert wird und durch Dialyse niedermolekulare Aminsalze entfernt werden. Als Retentat erhält man die an Polyasparaginsäure amidartig gebundenen Aminkomponenten.

In analoger Weise lassen sich andere primäre, sekundäre oder tertiäre Amine und Aminogruppen tragenden Basen zur Umsetzung von Polyaspartimid in wäßrigem Medium verwenden: Ammoniak, Diethanolamin, Triethanolamin, Aminopropanol, Aminozucker, Aminosorbit, Chitosan, Chitosamin, Galactosamin, Lysin, neutralisierte Aminosäuren wie beispielsweise Dinatriumaspartat, Dinatriumglutamat, Dinatriumsalz der Iminodiessigsäure, Ethylendiamin, Natriumsalz von Glycin.

Bevorzugt werden primäre und sekundäre, wasserlösliche Amine verwendet. Salzartig gebundene Amine können in amidartig gebundene umgewandelt werden: Dies geschieht durch thermische Behandlung unter Abspaltung von Wasser. Das Amin kann also zunächst als Base reagieren und dann in einem Folgeschritt chemisch verbunden zu werden. Die Abspaltung von Wasser kann durch Tempern bei Temperaturen zwischen 100 und 250°C erfolgen und kann durch Anlegen von Vakuum unterstützt werden. Dabei kann auf die Verwendung von Dimethylformamid als Lösemittel verzichtet werden, wie dies aus literaturbekannten Verfahren bekannt ist, um aminmodifizierte Polyasparaginsäuren herzustellen.

Die modifizierten Polyasparaginsäuren sind biologisch abbaubar nach OECD Guidelines for testing of chemicals (1981), 302 3 (modifizierter Zahn-Wellens-Test). Sie sind auch abbaubar gemäß der Abnahme des gelösten Sauerstoffs im geschlossenen Flaschentest. Sie sind auch biologisch abbaubar gemäß dem modifizierten SCAS-Test, vgl. EEC Directive, 79/831, Annex V, Part C und R. Wagner, Methoden zur Prüfung der biochemischen Abbaubarkeit chemischer Substanzen, Verlag Chemie, Weinheim 1988, Seite 62.

Polyasparaginsäuren können auch dadurch modifiziert werden, daß man monoethylenisch ungesättigte Monomere mit Ausnahme von Styrol in Gegenwart von Polyasparaginsäuren oder der oben beschriebenen Copolykondensate der Asparaginsäure radikalisch initiiert polymerisiert. Es bilden sich Pfropfcopolymerisate. Während der Pfropfreaktion kann ein Abbau des Molgewichts der Polyasparaginsäuren durch Hydrolyse stattfinden.

Geeignete monoethylenisch ungesättigte Monomere sind z. B. monoethylenisch ungesättigte Carbonsäuren wie beispielsweise Acrylsäure, Methacrylsäure, Maleinsäure, Fumarsäure, Itaconsäure oder Anhydride, wie Maleinsäureanhydrid oder Itaconsäureanhydrid.

Beispielsweise lassen sich folgende Pfropfpolymerisate herstellen:
40 Gew.-% Polyasparaginsäure,
10 Gew.-% Maleinsäure,
50 Gew.-% Acrylsäure.

10 Gew.-% Polyasparaginsäure,
20 Gew.-% Maleinsäure,
70 Gew.-% Acrylsäure.

90 Gew.-% Polyasparaginsäure,
5 Gew.-% Maleinsäure,
5 Gew.-% Acrylsäure.

60 Gew.-% Polyasparaginsäure,
5 Gew.-% Maleinsäure,
35 Gew.-% Acrylsäure.

40 Gew.-% Polyasparaginsäure,
60 Gew.-% Acrylsäure.

10 Gew.-% Polyasparaginsäure,
90 Gew.-% Acrylsäure.

50 Gew.-% Polyasparaginsäure,
50 Gew.-% Acrylsäure.

90 Gew.-% Polyasparaginsäure,
10 Gew.-% Acrylsäure.

Die ungesättigt modifizierten Polyaspartate werden auch zur radikalischen Pfropfcopolymerisation eingesetzt. Durch Verwendung der ungesättigt modifizierten Polyasparaginsäuren läßt sich die Pfropfausbeute (reziprok zur Homopolymerbildung) erhöhen. Als Polymerisationsmedium wird vorzugsweise Wasser allein oder in Mischungen mit üblichen organischen Lösemitteln eingesetzt. Es können auch Polyethylenglykole oder nichtionische Tenside auf Basis ethoxylierter langkettigen Alkohole als alleiniges Lösemittel oder Cosolvens mit Wasser oder organischen Lösemitteln für die radikalisch initiierte Pfropfcopolymerisation eingesetzt werden.

Als Comonomer für radikalisch initiierte Pfropfcopolymerisationen können mit Ausnahme von Styrol sämtliche bekannte Monomere verwendet werden, die zur radikalischen Polymerisation fähig sind.

Bevorzugt werden solche verwendet, die bekanntermaßen Copolymerisate mit Derivaten ungesättigter Carbonsäuren ausbilden, beispielsweise ungesättigte Carbonsäuren (Acrylsäure, Methacrylsäure), Acrylsäureethylester, Acrylsäurelaurylester, Maleinsäure, Maleinsäureanhydrid, Maleinsäurediethylester, Fumarsäure, Vinylester (Vinylacetat, Vinylpropionat), Acrylamid, Methacylamid, Vinylether (Butandiolmono- und divinylether, Butandiolmonovinylether-Ethoxylate, Methylvinylether) und Acrylnitril.

Die oben beschriebenen modifizierten Polyasparaginsäuren werden vorzugsweise durch Polymerisieren der Monomeren in wäßriger Lösung hergestellt, in der die Polyasparaginsäure partiell oder vollständig neutralisierter Form gelöst vorliegt. Der pH-Wert der wäßrigen Lösungen beträgt 1 bis 12. Die Pfropfcopolymerisate haben K-Werte von 10 bis 200 (bestimmt nach H. Fikentscher in 1 %iger wäßriger Lösung bei pH 7 und 25°C an Na-Salz der Pfropfpolymerisate).

Der Vorteil der Polycondensate von Asparaginsäure mit den Verbindungen (b) gegenüber den Homopolyaspartaten liegt in der schnelleren und somit besseren biologischen Abbaubarkeit, weil die Makromoleküle durch den Einbau von Estergruppierungen hydrolytisch oder enzymatisch (Lipasen) in kleinere Bruchstücke gespalten werden können, die einem leichten biologischen Abbau unterliegen.

Ein weiterer Vorteil liegt in der Herstellung der Polycokondensate. Durch den Einbau der Cokomponenten wird das Molgewicht begrenzt. Es ist somit möglich, durch gezieltes Zumischen von Cokomponenten ein bestimmtes Molgewicht zu erhalten. Die Ausbeuten sind praktisch quantitativ. Es resultieren außerdem anwendungstechnische Vorteile.

Der Restgehalt an gebundenem Phosphor (bei Durchführung der Polykondensation in Gegenwart einer Phosphorsäure) in den Polycokondensaten beträgt weniger als 3 Gew.-%, meistens liegt er unterhalb von 0,5 Gew.-%.

Die oben beschriebenen modifizierten Polyasparaginsäuren werden als Zusatz zu phosphatarmen oder phosphatfreien Wasch- und Reinigungsmitteln verwendet. In den meisten Fällen beträgt die angewendete Menge an Polykondensaten 0,1 bis 30 Gew.%, bezogen auf die Wasch- und Reinigungsmittel. Unter phosphatarmen Waschmitteln werden solche Formulierungen verstanden, die nicht mehr als 25 Gew.% Phosphat, berechnet als Natriumtriphosphat, enthalten. Phosphatfreie Waschmittel enthalten größtenteils Natriumaluminiumsilikat (Zeolith A). Die Polykondensate werden vorzugsweise in Mengen von 0,5 bis 15 Gew.%, bezogen auf die Wasch- oder Reinigungsmittelformulierung, eingesetzt.

Die Polykondensate besitzen in der Waschmittelflotte ein gutes Dispergiervermögen für Partikelschmutz, insbesondere für Tonmineralien (Clay). Diese Eigenschaft ist deshalb wichtig, weil lehmartige Verschmutzungen von Textilgut weit verbreitet sind. Die Polykondensate sind Builder für Waschmittel und bewirken während des Waschvorgangs eine Reduktion der Inkrustierung und der Vergrauung auf dem gewaschenen Textilgut. Sie sind somit auch als Inkrustations- und Vergrauungsinhibitoren geeignet.

Die Zusammensetzung der Wasch- und Reinigungsformulierungen kann sehr unterschiedlich sein. Wasch- und Reinigungsmittel enthalten üblicherweise 2 bis 50 Gew.-% Tenside und gegebenenfalls Builder. Diese Angaben gelten sowohl für flüssige als auch für pulverförmige Wasch- und Reinigungsmittel. Beispiele für die Zusammensetzung von Waschmittelformulierungen, die in Europa, in den USA und in Japan gebräuchlich sind, findet man beispielsweise in Chemical and Engn. News, Band 67, 35 (1989) tabellarisch zusammengestellt. Weitere Angaben über die Zusammensetzung von Wasch- und Reinigungsmitteln können der WO-A-90/13581 sowie Ullmanns Encyklopädie der technischen Chemie, Verlag Chemie, Weinhein 1983, 4. Auflage, Seiten 63-160 entnommen werden. Außerdem sind solche Waschmittelformulierungen von Interesse, die bis zu 60 Gew.-% eines Alkalisilikats und bis zu 10 Gew.-% eines erfindungsgemäßen Polykondensats enthalten. Als Alkalisilikate kommen beispielsweise die amorphen Natriumdisilikate in Betracht, die in der EP-A-0 444 415 beschrieben werden, sowie kristalline Schichtsilikate, die gemäß der EP-A-0 337 219 in Waschmittelformulierungen als Builder enthalten sind und gemäß der EP-B-0 164 514 zur Enthärtung von Wasser verwendet werden, und Natriumsilikate, die durch Entwässern von Natriumsilikatlösungen und Trocknen bis zu Wassergehalten von 15 bis 23, vorzugsweise 18 bis 20 Gew.-% erhältlich sind. Natriumaluminium-silikate (Zeolith A) können in Mengen bis zu 50 % in Waschmitteln enthalten sein.

Die Waschmittel können gegebenenfalls noch ein Bleichmittel enthalten, z.B. Natriumperborat, das im Fall seines Einsatzes in Mengen bis zu 30 Gew.-% in der Waschmittelformulierung enthalten sein kann. Die Wasch- und Reinigungsmittel können gegebenenfalls weitere übliche Zusätze enthalten, z.B. Komplexbildner, Citrate, Trübungsmittel, optische Aufheller, Enzyme, Parfümöle, Farbübertragungsinhibitoren, Vergrauungsinhibitoren und/oder Bleichaktivatoren.

Die modifizierten Polyasparaginsäuren sind außerdem als Wasserbehandlungsmittel geeignet. Sie werden dabei üblicherweise in Mengen von 1 bis 100 ppm dem Wasser in Kühlkreisläufen, Verdampfern oder Meerwasserentsalzungsanlagen zugesetzt.

Die modifizierten Polyasparaginsäuren wirken außerdem als Belagsverhinderer bei der Eindampfung von Zuckersaft. Sie werden dem Zuckerdünnsaft in Mengen von 0,1 bis 100 ppm zugesetzt.

Die modifizierten Polyasparaginsäuren beeinflussen die Kristallbildung und das Kristallwachstum anorganischer Salze wie beispielsweise Magnesium- oder Calciumcarbonat, -oxalat, -sulfat, Titandioxid, Siliciumdioxid, Ammoniumsulfat.

Sie können auch als Viskositätsregulierer bei der Herstellung von flüssigen und pulverförmigen Waschmitteln eingesetzt werden.

Die K-Werte der neutralisierten modifizierten Polykondensate und der Pfropfcopolymerisate wurden nach H. Fikentscher, Cellulosechemie, Band 13, 58 bis 64 und 71 bis 74 (1932) in wäßriger Lösung bei einer Temperatur von 25°C und einer Konzentration von 1 Gew.-% bei pH7 am Natriumsalz der Polymeren bestimmt. Die K-Werte der modifizierten Polyaspartimide wurden in 1 %iger Lösung in Dimethylformamid bei 25°C bestimmt. Die Prozentangaben in den Beispielen bedeuten Gew.-%.

### Beispiele

### Herstellung der modifizierten Polyasparaginsäuren

### Polycokondensate 1 bis 5

In einem 2 Liter-fassenden Reaktor, der mit einem Rührer ausgestattet war, wurden jeweils 113 g (1 Mol) L-Asparaginsäure, 0,1 Mol der in Tabelle 1 jeweils angegebenen Hydroxycarbonsäure und 1 Mol 75 %ige Phosphorsäure bei 20°C miteinander gemischt und unter Rühren auf eine Temperatur von 160°C erhitzt. Die Kondensation wird bei einem Druck von 50 mbar durchgeführt. Hierbei destilliert Wasser ab. Man erhält eine homogene Reaktionsmischung. Nach einer Reaktionszeit von 3 Stunden bei einer Temperatur von 160°C ist die Umsetzung beendet. Man erhält die jeweils in Tabelle 1 angegebenen Mengen an modifiziertem Polyasparaginimid. Die K-Werte der Imidform wurden in Dimethylformamid (DMF) und die der Natriumsalze in Wasser bestimmt.

Zur Aufarbeitung des modifizierten Polyasparaginimids wird das Reaktionsprodukt zunächst abgekühlt, dann zerkleinert und die zerkleinerte Reaktionsmasse in einem Liter 1-N-Salzsäure für 3 Stunden gerührt. Der unlösliche Rückstand wird dann mit Wasser und Aceton gewaschen und im Trockenschrank bei 50°C getrocknet. Um aus den modifizierten Polyaspartimiden wäßrigen Natriumsalzlösungen der modifizierten Polyasparaginsäuren herzustellen, dispergiert man jeweils ein Gramm des modifizierten Polyaspartimids in 50 g Wasser, erwärmt die Mischung auf 60°C und fügt bei dieser Temperatur soviel einer 15 %igen wäßrigen Natronlauge zu, daß der pH-Wert in dem Bereich von 9-10 liegt. Das in Wasser dispergierte Pulver löst sich allmählich zu einer klaren wäßrigen Lösung des Natriumsalzes der modifizierten Polyasparginsäure. Nur die Polykondensate 1 und 5 sind bekannte Stoffe.

**Tabelle 1**

| Polyconkondensat Nr. | Hydroxycarbonsäure | Ausbeute an modifiziertem Polyasparaginimid (g) | K-Wert | |
|---|---|---|---|---|
| | | | Imidform gemessen DMF | Na-Form 1 %ig in Wasser |
| 1 | Milchsäure | 100 | 32,8 | 66,3 |
| 2 | Äpfelsäure | 109 | 17,5 | 30,9 |
| 3 | Weinsäure | 101 | 21,2 | 33,1 |
| 4 | Zitronensäure | 111 | 14,9 | 20,7 |
| 5 | Glykolsäure | 105 | 25,1 | 44,0 |

### Polycokondensate 6 bis 9

Nach der oben angegebenen Vorschrift wird jeweils 1 Mol L-Asparaginsäure mit 0,1 Mol mehrwertigen Carbonsäuren, die in Tabelle 2 angegeben sind, bzw. mit Maleinsäureanhydrid modifiziert.

**Tabelle 2**

| Polycokondensat Nr. | Carbonsäure bzw. Carbonsäureanhydrid | Ausbeute Imidform (g) | K-Wert | |
|---|---|---|---|---|
| | | | Imidform gemessen (DMF) | Na-Form 1 %ig in (Wasser) |
| 6 | Butantetracarbonsäure | 121 | 13,3 | 16,4 |
| 7 | Maleinsäure | 103 | 21,0 | 37,9 |
| 8 | Maleinsäureanhydrid | 104 | 19,2 | 32,7 |
| 9 | Fumarsäure | 96 | 23,6 | 43,2 |

### Polykondensate 10-11

Nach der für die Herstellung der Polycokondensate 1-5 gegebenen Vorschrift kondensiert man 1 Mol L-Asparaginsäure mit jeweils 0,1 Mol des in Tabelle 3 angegebenen Polyols. Die dabei erhältlichen Ausbeuten und K-Werte der Polycokondensate sind in Tabelle 3 aufgeführt.

**Tabelle 3**

| Polycokondensat Nr. | Polyol | Ausbeute [g] | K-Wert | |
|---|---|---|---|---|
| | | | Imidform (DMF) | Na-Form (Wasser) |
| 10 | Sorbit | 104 | 26 | 38 |
| 11 | Glycerin | 98 | 28 | 51 |

### Polycokondensat 12

In einem 2 Liter fassenden Laborkneter werden 333 g (2,5 mol) Asparaginsäure, 326 g 75 %ige wäßrige Phosphorsäure und 17 g des Umsetzungsprodukts aus 1 Mol eines C₁₃/C₁₅ Oxoalkohols mit 7 Mol Ethylenoxid eingefüllt und bei 180°C im Vakuum bei gleichzeitigem Abdestillieren von Wasser kondensiert. Die Kondensation ist nach 6 Stunden beendet. Nach der für die Herstellung der Polycokondensate 1 bis 5 angegebenen Aufarbeitungsmethode erhält man 260 g eines Polykondensats mit einem K-Wert von 32 in Dimethylformamid. Nach Hydrolyse dieses Copolymerisats mit Natronlauge erhält man die Natriumsalzform des Polycokondensats, die einen K-Wert von 67 hat.

### Pfropfcopolymerisat 1

In einem 2 Liter fassenden Reaktor wird eine Mischung aus 340 g 25 %iger wäßriger Natrium-Polyaspartatlösung von K-Wert 50 (gemessen 1 %ig in Wasser), 64 g Maleinsäureanhydrid, 3,5 g 0,1 %iger Eisen-II-Ammoniumsulfatlösung und 94 g 50 %ige wäßrige Natronlauge auf 100°C erhitzt. Dann dosiert man 320 g 55 %ige wäßrige Acrylsäure und 60 g 12 %iges Wasserstoffperoxid innerhalb von 3 Stunden zu. Die Polymerisation wird bei einer Temperatur von 100°C durchgeführt. Sie ist nach 4 Stunden beendet. Nach Beendigung der Polymerisation läßt man das Reaktionsgemisch abkühlen und stellt es durch Zugabe von wäßriger Natronlauge auf einen pH-Wert von 7 ein. Das Pfropfcopolymer hat einen K-Wert von 61 (gemessen 1 %ig in Wasser).

### Anwendungstechnische Prüfungen

Die oben beschriebenen modifizierten Polyasparaginsäuren können in saurer, teilneutralisierter oder vollständig neutralisierter Form gegebenenfalls zusammen mit Dispergatoren in Waschmittelformulierungen, Waschmittelkonzentraten, Kompaktwaschmitteln und Flüssigwaschmittelformulierungen eingesetzt werden. Sie zeigen in den Waschmittelformulierungen eine verbesserte Waschwirkung. Die modifizierten Polyasparginsäuren eignen sich besonders gut für die Ablösung von Tonmineralschmutz vom Textilgut und für die Dispergierung von Tonmineralien, die beim Waschen vom Textilgut abgelöst und in der Waschflotte vorhanden sind. Die Wirkung der modifizierten Polyasparaginsäuren ist mit derjenigen von nicht biologisch abbaubaren Polyacrylaten mit Molmassen von 5000 (K-Wert 30) vergleichbar und übertrifft die Wirkung von Homopolykondensaten der Asparaginsäure.

Die Clay-Dispergierung wurde nach dem im folgenden beschriebenen Clay-Dispergiertest (CD-Test) beurteilt.

### CD-Test

Als Modell für partikulären Schmutz wird feingemahlener China-Clay SPS 151 benutzt. 1 g Clay wird unter Zusatz von 1 ml einer 0,1 %igen Natriumsalzlösung des Polyelektrolyten in 98 ml Wasser 10 Minuten in einem Standzylinder (100 ml) intensiv dispergiert. Sofort nach dem Rühren nimmt man aus der Mitte des Standzylinders eine Probe von 2,5 ml und bestimmt nach dem Verdünnen auf 25 ml die Trübung der Dispersion mit einem Turbidimeter. Nach 30- bzw. 60-minütiger Standzeit der Dispersion werden erneut Proben genommen und wie oben die Trübung bestimmt. Die Trübung der Dispersion wird in NTU (nephelometric turbidity units) angegeben. Je weniger sich die Dispersion während der Lagerung absetzt, desto höher sind die gemessenen Trübungswerte und um so stabiler ist die Dispersion. Als zweite physikalische Meßgröße wird die Dispersionskonstante bestimmt, die das zeitliche Verhalten des Sedimentationsprozesses beschreibt. Da der Sedimentationsprozeß annähernd durch ein monoexpotentielles Zeitgesetzt beschrieben werden kann, gibt **T** die Zeit an, in der die Trübung auf 1/e-tel des Ausgangs< zustandes zum Zeitpunkt t=O abfällt.

Je höher ein Wert für **T** ist, um so langsamer setzt sich die Dispersion ab.

Die oben beschriebenen Polycokondensate wurden jeweils in Form ihrer Natriumsalze nach den oben angegebenen Testmethoden untersucht. Die Dispergierwirkung der Polycokondensate ist in Tabelle 4 angegeben.

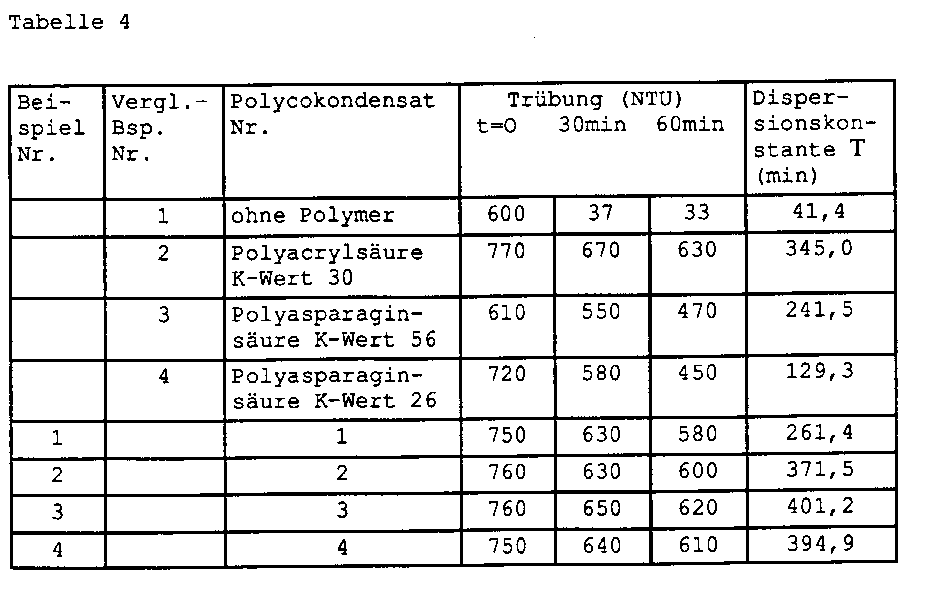

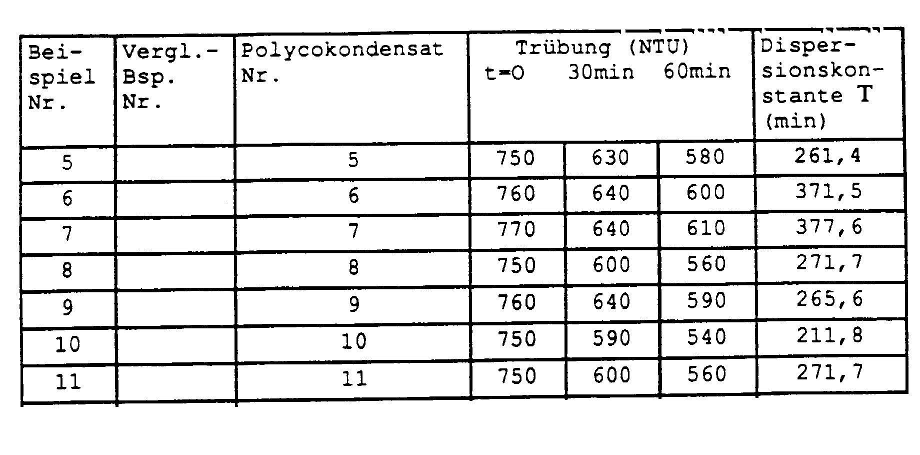

Den Meßwerten ist zu entnehmen, daß man mit den erfindungsgemäß zu verwendeten modifizierten Polyasparaginsäuren Dispersionen erhält, die nach 60-minütiger Standzeit hohe Trübungswerte (NTU-Einheiten) aufweisen. Die hohen Dispersionskonstanten bedeuten, daß die erfindungsgemäß zu verwendenden modifizierten Polyasparaginsäuren Clay sehr gut dispergieren können und gleichzeitig die Herstellung von Dispersionen mit verbesserter Lagerstabilität erlauben. Die vom Test 1 gut abgelösten und in der Waschflotte befindliche Tonmineralien werden von den Polycokondensaten am Wiederabsetzen gehindert und in dispergierter Form in der Flotte gehalten.

### Test auf Primärwaschvermögen

Speziell wurde das Tonablösevermögen von Textilgewebe an Hand von Waschversuchen untersucht. Tonmineralien sind gefärbt und geben bei einer Ablagerung auf dem Gewebe diesem einen Farbschleier. Um die Primärwaschwirkung von Ton auf dem Gewebe zu erfassen, wurde Baumwoll/Polyestergewebe mit einer Tonmischung bestehend aus je 33,3 % aus den Sorten 178/R (ockerfarben), 262 (braun) und 84/rf (rotbraun) der Fa. Carl Jäger, Hilgert, gleichmäßig beschichtet. Die Tonsorten sind unterschiedlich "fett"; d. h. sie unterscheiden sich im Gehalt an Aluminium-, Eisen- und Manganoxid. Die Tonmischischung wurde in Form einer 20 %igen Suspension in vollentsalztem Wasser unter kräftigem Umpumpen der Suspension homogen auf das Gewebe gebracht. Dies wurde mit einem Jigger der Fa. Küsters, Krefeld, bei 10 meter/min unter Verwendung von BW/PES²⁾-Gewebe (33/67, Fa. Winkler, Waldshut) durchgeführt. Nach 3 Durchläufen wurde anschließend mit 600 1 vollständig entsalztem Wasser ein Mal gespült. Danach wurde das nasse Gewebe in einem Spannrahmen bei 50°C und 2 meter/min Trockengeschwindigkeit getrocknet. Das auf diese Weise hergestellte Tongewebe enthält 1,76 % Ton, bestimmt durch Veraschung bei 700°C, 2,5 h.

Die Waschversuche wurden unter folgenden Bedingungen durchführt:

| | |
|---|---|
| Waschgerät | Launder-o-meter |
| Anzahl der Waschzyklen | 1 |
| Anzahl der Spülzyklen | 1 |
| Anzahl der Waschversuche | 6 |
| Waschtemperatur | 20-24°C |
| Waschdauer | 15 min |
| Flottenmenge | 500 g VE¹⁾-Wasser + 80 ppm ethoxilierter Oxoalkohol (C13,15-Oxoalkohol + 8 Ethylenoxid) |
| Wasserhärte (Ca²⁺ + Mg²⁺) | 1 mmol/l |
| Molverhältnis | 3:1:6 |
| Ca²⁺:Mg²⁺:HCO₃₋ | |
| pH | 10 ± 0,1 |
| Testkonzentration des Polymer | 80 ppm |
| Schmutzgewebe | 5 g Tongewebe |
| Weißgewebe bzw. sauberes Gewebe | 5 g PES/BW²⁾-Gewebe |

| | |
|---|---|
| ¹⁾ VE = vollständig entsalztes | |
| ²⁾ PES/BW = Polyester/Baumwolle | |

Nach dem Spülen wird geschleudert und die Gewebe zum Trocknen einzeln aufgehängt. Vermessen wird das Gewebe mit einem Elrepho 2000 der Fa. Data Color, Heidenheim, und zwar 6 Meßpunkte pro Gewebestück. Der für die Auswertung verwendete Wellenlängenbereich beträt 420 - 700 nm. Gemessen wird der Reflexionsgrad als Funktion der Wellenlänge. Als Referenz dient Bariumsulfat. Aus den Remissionswerten wird nach W. Baumann, R. Broßmann, B.T. Gröbel, N. Kleinemeier, M. Krayer, A.T. Leaver und H.-P. Oesch; Melliand Textilberichte 67 (1986), 562 ff. die Farbstärke mit Wichtung der Augenreizfunktion berechnet. Die genauen Berechnungsmethoden können aus Tenside, Surfactants, Detergents, 6, 1991, 497 ff. entnommen werden. Die Primärwaschwirkung in % wird nach der folgenden Gleichung berechnet:
- P =: (f_{s,b} - f_{s,a})/(f_{s,b} - f_{s,o})*100
- f_{s,b} =: Farbstärke des angeschmutzten Gewebes (Tongewebe) vor dem Waschen.
- f_{s,a} =: Farbstärke des angeschmutzten Gewebes nach dem Waschen.
- f_{s,o} =: Farbstärke des sauberen Gewebes vor der Anschmutzung (Schmutzgewebe vor der Anschmutzung).

Die Verwendung der Farbstärke zur Berechnung der Primärwaschwirkung hat im Vergleich zur Remission bei einer Wellenlänge oder dem in der Literatur verwendeten K/S-Werten (K - Absorptionskoeffizient und S = Streukoeffizient) bei einer Wellenlänge den Vorteil, daß der sichtbare Bereich des Spektrums erfaßt wird und Schmutzpartikel aller Farben berücksichtigt werden.

**Tabelle 5**

| | Zusatz zur Waschflotte Polykondensat Nr. | Primärwaschwirkung P % (Mittelwert aus 6 Waschversuchen) |
|---|---|---|
| Vergleichsbeispiel 5 | ohne | 55,7 |
| Beispiel Nr. | | |
| 12 | 1 | 59,6 |
| 13 | 2 | 60,2 |
| 14 | 3 | 61,9 |
| 15 | 4 | 60,7 |
| 16 | 5 | 60,2 |
| 17 | 7 | 60,7 |
| 18 | 8 | 60,3 |
| 19 | 10 | 62,0 |
| 20 | 11 | 63,0 |
| 21 | 6 | 60,3 |

Den Meßwerten ist zu entnehmen, daß man mit den erfindungsgemäß zu verwendenden Polyasparaginsäuren Dispersionen erhält, die nach 60minütiger Standzeit hohe Trübungswerte (NTU-Einheiten) aufweisen. Die hohen Dispersionskonstanten bedeuten, daß die erfindungsgemäß zu verwendenden Polyasparaginsäuren Clay sehr gut dispergieren können und gleichzeitig die Herstellung von Dispersionen mit verbesserter Lagerstabilität erlauben.

Für die Anwendung in der Wasserbehandlung ist die Inhibierung von Calciumcarbonat-Ausfällungen von ausschlaggebender Bedeutung. Beispiele sind: Zuckersafteindampfung, Kühlkreisläufe, Meerwasserentsalzungsanlagen, Dampferzeuger, Heizkreisläufe, Warmwasserkreisläufe, Wärmetauscher, Turbinen und Pumpen.

### Calciumcarbonat-Inhibierung (2 ppm Polycokondensat-Konzentration)

Es werden 2 Testlösungen vorbereitet. Testlösung 1 besteht aus Wasser mit 20°dH Calciumhärte und 10°dH Magnesiumhärte. Testlösung 2 ist eine wäßrige Lösung mit 4,7°dH Natriumcarbonat und 12,3°dH Natriumhydrogencarbonat.

In einem 500 ml fassenden Rundkolben, der mit Rührer, Rückflußkühler und Gaseinleitungsrohr ausgestattet ist, werden 150 ml Testlösung 1 und 150 ml Testlösung 2 sowie 2 ppm des zu testenden Polymers vorgelegt und unter Einleiten von Luft (3 1/Std.) für 1 Stunde auf 70°C erhitzt. Man läßt den Kolbeninhalt abkühlen und filtriert durch ein Faltenfilter. Im Filtrat wird nach üblicher Methode der Calciumgehalt durch komplexometrische Titration bestimmt.

| Beispiel Nr. | Polycokondensat Nr. | CaCO₃-Inhibierung (%) |
|---|---|---|
| 22 | 1 | 82 |
| 23 | 2 | 97 |
| 24 | 3 | 95 |
| 25 | 4 | 99 |
| 26 | 5 | 57 |
| 27 | 6 | 96 |
| 28 | 7 | 60 |
| 29 | 8 | 96 |
| 30 | 9 | 65 |
| 31 | 10 | 96 |
| 32 | 11 | 97 |
| 33 | 12 | 85 |

Im beschriebenen Versuch zeigt sich, daß die modifizierten Polyasparaginsäuren die Ausfällungen von CaCO₃ gut unterbinden können.

Die Polykondensate können auch eingesetzt werden, um die Ausfällung von Calcium-, Barium- und Magnesiumsalzen mit den Anionen Phosphat, Oxalat, Sililat, Sulfat, Carbonat, in wäßrigen Systemen zu inhibieren.

Besonders geeignet sind die Polykondensate zur Belags-Inhibierung durch Calciumcarbonat, Calciumsulfat, Calciumoxalat, Calciumphosphat, Siliciumdioxid. Sie zeigen stabiles Verhalten gegenüber Calciumionen. Das heißt, daß die Polykondensate nicht als Calciumsalze ausfallen.

Durch Umsetzung der Imidform des Polycokondensates Nr. 2 in wäßriger Suspension mit Ethanolamin wird ein Amin-modifiziertes Polycokondensat erhalten und als viskositätserniedrigendes Additiv für ein wasserhaltiges nichtionisches Tensid A (Umsetzungsprodukt eines C13/15 Oxoalkohols mit 7 Mol Ethylenoxid) verwendet. Man verwendet 5 % Polycokondensat bzgl. nichtionisches Tensid. Durch Verdünnen mit Wasser wird eine Konzentrationsreihe hergestellt und mittels Brookfield-Viskosimeter bei 5 Upm die Viskosität gemessen. Als Vergleich dient polykondensatfreies Tensid A. Man erkennt deutlich die viskositätssenkende Wirkung des Polycokondensates.

| Tensidgehalt (%) | Viskosität (mPas) der Mischung Tensid A/Wasser | |
|---|---|---|
| | mit | ohne Polykondensat 2 |
| 87 | 610 | 560 |
| 65 | 150 000 | 300 000 |
| 52 | 6 500 | 365 000 |
| 40 | 3 100 | 1 000 000 |
| 29 | 5 100 | 12 000 |

## Patentansprüche

1. Modifizierte Polyasparaginsäuren, dadurch gekennzeichnet, daß sie erhältlich sind durch Polycokondensation von
(a) 1 bis 99,9 mol-% Asparaginsäure mit
(b) 99 bis 0,1 mol-% an Fettsäuren, mehrbasischen Carbonsäuren, Anhydriden mehrbasischer Carbonsäuren, mehrbasischen Hydroxycarbonsäuren, einbasischen Polyhydroxycarbonsäuren, alkoxylierten Alkoholen, alkoxylierten Aminen, Aminozuckern, Kohlenhydraten und/oder Zuckercarbonsäuren sowie Mischungen der genannten Verbindungen zu Polykondensaten mit K-Werten von 5 bis 150
oder durch Polymerisieren von monoethylenisch ungesättigten Monomeren mit Ausnahme von Styrol in Gegenwart von Polyasparaginsäuren und/oder Cokondensaten der Asparaginsäure nach Art einer radikalisch initiierten Pfropfpolymerisation zu Pfropfpolymerisaten mit K-Werten von 10 bis 200, wobei die K-Werte jeweils nach H. Fikentscher in 1%iger wäßriger Lösung bei pH 7 und 25°C am Natriumsalz bestimmt werden.

2. Modifizierte Polyasparaginsäuren nach Anspruch 1, dadurch gekennzeichnet, daß sie erhältlich sind durch Polycokondensation von
(a) Asparaginsäure mit
(b) Butantetracarbonsäure, Citronensäure, Maleinsäureanhydrid, Weinsäure, Maleinsäure, Sorbit, Fumarsäure, Aconitsäure, Sulfobernsteinsäure oder Äpfelsäure.

3. Verfahren zur Herstellung von modifizierten Polyasparaginsäuren, dadurch gekennzeichnet, daß man
(a) 1 bis 99,9 mol-% Asparaginsäure mit
(b) 99 bis 0,1 mol-% an Fettsäuren, mehrbasischen Carbonsäuren, Anhydriden mehrbasischer Carbonsäuren, mehrbasischen Hydroxycarbonsäuren, einbasischen Polyhydroxycarbonsäuren, alkoxylierten Alkoholen und alkoxylierten Aminen, Aminozuckern, Kohlenhydraten und/oder Zuckercarbonsäuren sowie Mischungen der genannten Verbindungen
bei Temperaturen von 120 bis 270°C der Polycokondensation unterwirft oder daß man monoethylenisch ungesättigte Mononere mit Ausnahme von Styrol in Gegenwart von Polyasparaginsäuren, Cokondensaten der Asparaginsäure oder den Ammonium-, Alkalimetall- oder Erdalkalimetallsalzen von Polyasparaginsäuren und/oder ihren Cokondensaten und Radikale bildenden Polymerisationsinitiatoren polymerisiert.

4. Verwendung der modifizierten Polyasparaginsäuren und deren Ammonium- und Alkalisalze nach Anspruch 1 oder 2 als Zusatz zu phosphatarmen und phosphatfreien Wasch- und Reinigungsmitteln, als Wasserbehandlungsmittel und als Belagsverhinderer bei der Eindampfung von Zuckersaft.

5. Verwendung von modifizierten Polyasparaginsäuren, die erhältlich sind durch Polykondensation von
(a) 1 bis 99,9 mol-% Asparaginsäure mit
(b) 99 bis 0,1 mol-% an Glykolsäure und/oder Milchsäure
und Umsetzung der Polycokondensate mit Aminen oder Alkalimetallbasen in wäßrigem Medium als Zusatz zu phosphatarmen und phosphatfreien Wasch- und Reinigungsmitteln, als Wasserbehandlungsmittel und als Belagsverhinderer bei der Eindampfung von Zuckersaft.

6. Verwendung von modifizierten Polyasparaginsäuren, die durch Polycokondensation von
(a) 1 bis 99,9 mol-% Asparaginsäure mit
(b) 99 bis 0,1 mol-% Alkoholen und/oder Aminen
bei Temperaturen vsaveon 120 bis 270°C zu Polykondensaten mit K-Werten von 10 bis 100 (bestimmt nach H. Fikentscher in 1 %iger wäßriger Lösung bei pH 7 und 25°C am Natriumsalz), Aufschlämmen der Polykondensate in Wasser und Hydrolysieren und Neutralisieren mit Basen hergestellt werden, als Zusatz zu phosphatarmen und phosphatfreien Wasch- und Reinigungsmitteln.

7. Verwendung nach Anspruch 6, dadurch gekennzeichnet, daß man als Komponente (b) Cyclohexylamin, Octylamin, Stearylamin, Palmitylamin, Ethylendiamin, Triethylentetramin, Hexamethylendiamin, Diaminobutan und/oder Oleylamin einsetzt.

8. Verwendung nach Anspruch 7, dadurch gekennzeichnet, daß man als Komponente (b) Oleylamin einsetzt.

## Claims

1. Modified polyaspartic acids obtainable by polycocondensation of
(a) from 1 to 99.9 mol% of aspartic acid with
(b) from 99 to 0.1 mol% of fatty acids, polybasic carboxylic acids, anhydrides of polybasic carboxylic acids, polybasic hydroxycarboxylic acids, monobasic polyhydroxycarboxylic acids, alkoxylated alcohols, alkoxylated amines, amino sugars, carbohydrates and/or sugarcarboxylic acids and mixtures of the stated compounds to give polycondensates having K values of from 5 to 150
or by polymerization of monoethylenically unsaturated monomers with the exception of styrene in the presence of polyaspartic acids and/or cocondensates of aspartic acid in the manner of a free-radically initiated graft polymerization to give graft polymers having the values of from 10 to 200, the K values being determined by the method of H. Fikentscher at pH 7 and 25°C on a 1% aqueous solution of the sodium salt.

2. Modified polyaspartic acids as claimed in claim 1, obtainable by polycocondensation of
(a) aspartic acid with
(b) butanetetracarboxylic acid, citric acid, maleic anhydride, tartaric acid, maleic acid, sorbitol, fumaric acid, aconitic acid, sulfosuccinic acid or malic acid.

3. A process for preparing modified polyaspartic acids, which comprises polycocondensing
(a) from 1 to 99.9 mol% of aspartic acid with
(b) from 99 to 0.1 mol% of fatty acids, polybasic carboxylic acids, anhydrides of polybasic carboxylic acids, polybasic hydroxycarboxylic acids, monobasic polyhydroxycarboxylic acids, alkoxylated alcohols and alkoxylated amines, amino sugars, carbohydrates and/or sugarcarboxylic acids and mixtures of the stated compounds
at from 120 to 270°C or polymerizing monoethylenically unsaturated monomers with the exception of styrene in the presence of polyaspartic acids, cocondensates of aspartic acid or the ammonium, alkali metal or alkaline earth metal salts of polyaspartic acids and/or their cocondensates and free-radical polymerization initiators.

4. The use of the modified polyaspartic acids of claim 1 or 2 and of ammonium and alkali metal salts thereof, as reduced-phosphate and phosphate-free detergent and cleaner additives, as water treatment agents and as scale inhibitors in the evaporation of sugar juice.

5. The use as reduced-phosphate and phosphate-free detergent and cleaner additives, as water treatment agents and as scale inhibitors in the evaporation of sugar juice of modified polyaspartic acids obtainable by polycondensation of
(a) from 1 to 99.9 mol% of aspartic acid with
(b) from 99 to 0.1 mol% of glycolic acid and/or lactic acid
and reaction of the polycocondensates with amines or alkali metal bases in an aqueous medium.

6. The use as reduced-phosphate and phosphate-free detergent and cleaner additives of modified polyaspartic acids prepared by polycondensation of
(a) from 1 to 99 mol% aspartic acid with
(b) from 99 to 0.1 mol% of alcohols and/or amines at from 210 to 270°C to give polycondensates having K values of from 10 to 100 (determined by the method of H. Fikentscher at pH 7 and 25°C on a 1% aqueous solution of the sodium salt), suspending the polycondensates in water and hydrolyzing and neutralizing with bases.

7. A use as claimed in claim 6, wherefor component (b) is cyclohexylamine, octylamine, stearylamine, palmitylamine, ethylenediamine, triethylenetetramine, hexamethylenediamine. diaminobutane and/or oleylamine.

8. A use as claimed in claim 7, wherefor component (b) is oleylamine.

## Revendications

1. Acides polyaspartiques modifiés, caractérisés en ce qu'ils sont obtenus par polycocondensation de
a) 1 à 99,9% en moles d'acide aspartique avec
b) 99 à 0,1% en moles d'acides gras, d'acides polycarboxyliques, d'anhydrides d'acides polycarboxyliques, d'acides hydroxypolycarboxyliques, d'acides polyhydroxymonocarboxyliques, d'alcools alcoxylés, d'amines alcoxylées, de sucres aminés, de glucides et/ou d'acides glucocarboxyliques, ainsi que de mélanges desdits composés, en produits de polycondensation ayant des valeurs K de 5 à 150,
ou par polymérisation de monomères à insaturation monoéthylénique à l'exception du styrène, en présence d'acides polyaspartiques et/ou de produits de cocondensation de l'acide aspartique, à la manière d'une polymérisation par greffage amorcée par voie radicalaire, en polymères greffés ayant des valeurs K de 10 à 200, les valeurs K étant déterminées chaque fois selon H, Fikentscher en solution aqueuse à 1%, à un pH de 7 et à 25°C, en présence de sel de sodium.

2. Acides polyaspartiques modifiés selon la revendication 1, caractérisés en ce qu'ils sont obtenus par polycocondensation
a) d'acide aspartique avec
b) de l'acide butanetétracarboxylique, de l'acide citrique, de l'anhydride maléique, de l'acide tartrique, de l'acide maléique, du sorbitol, de l'acide fumarique, de l'acide aconitique, de l'acide sulfosuccinique ou de l'acide malique.

3. Procédé de préparation d'acides polyaspartiques modifiés, caractérisé en ce que l'on soumet à la polycocondensation, à des températures de 120 à 270°C,
a) 1 à 99,9% en moles d'acide aspartique avec
b) 99 à 0,1% en moles d'acides gras, d'acides polyzarboxyliques, d'anhydrides d'acides polycarboxyliques, d'acides hydroxypolycarboxyliques, d'acides polyhydroxymonocarboxyliques, d'alcools alcoxylés et d'amines alcoxylées, de sucres aminés, de glucides et/ou d'acides glucocarboxyliques, ainsi que de mélanges desdits composés,
ou on polymérise des monomères à insaturation monoéthylénique à l'exception du styrène, en présence d'acides polyaspartiques, de produits de cocondensation de l'acide aspartique ou de sels d'ammonium, de métaux alcalins ou de métaux alcalino-terreux d'acides polyaspartiques et/ou de leurs produits de cocondensation et en présence d'amorceurs de polymérisation générateurs de radicaux.

4. Utilisation des acides polyaspartiques modifiés et de leurs sels d'ammonium et de métaux alcalins selon la revendication 1 ou 2 comme additif à des produits de lavage et de nettoyage pauvres en phosphates et dépourvus de phosphates, comme agent de traitement de l'eau et comme inhibiteur de dépôt lors de l'évaporation de sirops de sucre.

5. Utilisation d'acides polyaspartiques modifiés, qui sont obtenus par polycondensation de
a) 1 à 99,9% en moles d'acide aspartique avec
b) 99 à 0,1% en moles d'acide glycolique et/ou d'acide lactique
et réaction des produits de polycocondensation avec des amines ou des bases de métaux alcalins en milieu aqueux, comme additif à des produits de lavage et de nettoyage pauvres en phosphates et dépourvus de phosphates, comme agent de traitement de l'eau et comme inhibiteur de dépôt lors de l'évaporation de sirops de sucre.

6. Utilisation d'acides polyaspartiques modifiés, qui sont préparés par polycocondensation de
a) 1 à 99,9% en moles d'acide aspartique avec
b) 99 à 0,1% en poids d'alcools et/ou d'amines à des températures de 120 à 270°C, en produits de polycondensation ayant des valeurs K de 10 à 100 (déterminées suivant H. Fikentscher en solution aqueuse à 1%, à un pH de 7 et à 25°C en présence de sel de sodium), mise en suspension des produits de polycondensation dans de l'eau et hydrolyse et neutralisation avec des bases, comme additif à des produits de lavage et de nettoyage pauvres en phosphates et dépourvus de phosphates.

7. Utilisation selon la revendication 6, caractérisée en ce que l'on utilise, comme composant (b), de la cyclohexylamine, de l'octylamine, de la stéarylamine, de la palmitylamine, de l'éthylènediamine, de la triéthylènetétramine, de l'hexaméthylènediamine, du diaminobutane et/ou de l'oléylamine.

8. Utilisation selon la revendication 7, caractérisée en ce que l'on utilise de l'oléylamine comme composant (b).
